# EUROPEAN PATENT SPECIFICATION

(11) **EP 0 895 757 B1**
(45) Date of publication and mention of the grant of the patent: **05.12.2001**
(21) Application number: 98114129.4
(22) Date of filing: 29.07.1998
(51) Int. Cl.: A61C 8/00

(54) **Osteo-integrated dental implant**
Osteointegriertes Zahnimplantat
Implant dentaire ostéo-intégré

(30) Priority: 07.08.1997 IT MI971906
(43) Date of publication of application: 10.02.1999
(73) Proprietor: Corigliano, Massimo, 00184 Roma (IT)
(72) Inventor: Corigliani, Massimo, 00184 Roma (IT); Cerutti, Myriam, 28035 Castelletto Ticino (NO) (IT)
(74) Representative: Coloberti, Luigi

(56) References cited:
- EP-A- 0 702 940
- WO-A-97/25939
- DE-A- 3 136 602
- US-A- 5 000 686
- WILLMANN G: "FRETTING BEI MODULAR AUFGEBAUTEN IMPLANTATSYSTEMEN FRETTING OF MODULAR IMPLANT SYSTEMS" BIOMEDIZINISCHE TECHNIK, vol. 38, no. 3, 1 March 1993, pages 48-52, XP000360416

## Description

The present invention relates to improvements to dental implants and more specifically is directed to an osteo-integrated dental implant, of the transmucosa, semi-submerged or submerged screw type, comprising a cylindrical neck portion for attachment of a dental prosthesis, and a threaded shank tapering from one end of the neck portion, according to the pre-characterizing part of claim 1.

There are currently a number of transmucosa, semi-submerged or submerged screw dental implants such as described in US-A-4,863,383, which implants substantially comprise a cylindrical or slightly conical neck, which extends in a tapering shank having a screw-thread comprising continuous turns which extend along the entire length of the shank.

The extension of the screw-thread on the tapering shank portion only of the implant according to US-A-4,863,383, sometimes does not provide a firm anchoring to the bone tissue, particularly in the neck portion of the same implant.

Furthermore, the use of threads which extend on the conical shank only, and the presence of continuous or uninterrupted turns according to implants currently in use, entail certain disadvantages such as a lower capacity of the implant to integrate with the bone tissue, and therefore provide efficient stability or capacity of the same implant to absorb, transmit or dissipate the static and dynamic loads which occur during a chewing action. Moreover the continuity of the thread turns in a conventional dental implant hinders or renders difficult the reflux of biological liquids during screwing of the implant, which liquids may only return by passing over the turns of the thread, and hence making the implant rotate alternately in the two reverse directions during its screwing. Therefore the fluids are strongly decelerated or may also remain trapped in the bone cavity, causing possible aseptic necrosis due to compression, with subsequent lengthening of the times of healing and with possible reduction or loss of the osteo-integration. To provide a self-tapping operation, US-A-4,863,383 suggests the use of V shaped indentations in each turn or convolution of the threaded shank; although the use of V shaped indentations allow reflux of biological liquids during the screwing down of the implant, nevertheless said V shaped indentations are provided on a sharp-edged crest and therefore reduce the thread capability of anchoring to the bone.

US-A-5.000.686, which is the closest prior art, discloses an osteo-integrated dental implant of the type described in the pre-characterising portion of the claim 1.

### OBJECTS OF THE INVENTION

The main object of the present invention is therefore to provide an osteo-integrated implant, of the transmucosa, semi-submerged, or submerged screw type, which has efficient stability due to its capacity to become firmly anchored to the bone tissue during screwing, without the bone tissue being disrupted due to the self-tapping action of the turns and indentations, in that the latter, being merely interrupted by small cuts, can be deformed in order to assume a more biologically suitable condition.

A further object of the present invention is to provide an osteo-integrated dental implant, as referred to above, whereby it is possible to increase the anchoring interface with the bone and hence increase the capacity for absorption, transmission and dissipation of static and dynamic loads which may act on the implant itself once osteo-integration has taken place.

Yet a further object of the invention is to provide a dental implant as referred to above, which allows easy outflow of biological fluids during its screwing, preventing said fluids from remaining trapped in the bone cavity and creating damaging compression. In this way the healing times are considerably shortened.

### BRIEF DESCRIPTION OF THE INVENTION

The above can be obtained by means of an osteo-integrated dental implant having the features of claim 1.

More generally, according to the invention, an osteo-integrated dental implant of the type comprising:
- a neck (10A) and a tapered shank (12) coaxially extending from one side of said neck (10A) ;
- a screw threaded bore (16, 17) axially extending through said neck (10A) and the shank (12) for attachment of a dental prosthesis;
- at least one screw-thread (13) having a trapezoidal profile on the tapered shank (12), said screw thread (13) including cylindrical turns (13') near said neck (10A), wherein the implant further comprises a cylindrical neck (10A) and a rim (10B) having a cylindrical smooth surface radially protruding from the rear end of the neck (10A) which is opposite to the tapered shank (12), said screw-thread (13) of the shank (12) extending with a cylindrical screw-thread portion (14) over the neck (10A) to terminate flush to the cylindrical surface of the peripheral rim (10B); characterized in that the tapered shank (12) comprises a conical screw-thread (13) extending with the cylindrical screw-thread portion (14) on the neck (10A), and in that the turns of the screw-thread (13) of the tapered shank (12) comprise independent elaticastically yielding screw portions (13A) between radially extending cross-cuts (15).

According to the needs or uses foreseen, the cross-cuts in the turns of the screw-thread are arranged to be parallely aligned to a generatrix of the conical surface of the shank, or are arranged with a helical trend which develops in the same direction or in an opposite direction to the convolutions of the thread of the shank.

According to a further feature of the invention, the screw-thread on the neck has shallow cylindrical turns which find continuity in the cylindrical turns of the thread of the conical shank.

The presence of cross-cuts having radially extending edges in the turns of the threaded shank therefore tends to create independent turn sections, which are more easily inserted in the bone tissue, providing a more efficient stability for the implant.

### BRIEF DESCRIPTION OF THE DRAWINGS

These and further features of an osteo-integrated dental implant according to the invention will be made clearer by the following description, with reference to the accompanying drawings, in which:
- Fig. 1 is a front view of an embodiment of a dental implant according to the invention;
- Fig. 2 is a longitudinal sectional view of the implant of Fig. 1;
- Fig. 3 is a cross sectional view along line 3-3 of Fig. 1.

### DETAILED DESCRIPTION OF THE INVENTION

As shown in the figures, the screw implant is provided by an elongated metal body 10, for example in titanium, comprising a cylindrical neck 10A and a threaded shank 11 having a substantially conical shape, which tapers and extends forwards from the neck 10A for a predetermined length.

More specifically, the shank 11 of the implant is formed by a conical core 12 provided with a conical thread 13 on the external surface which has been formed by machining and which continues in a cylindrical thread 14 on the external surface of the neck 10A.

The conical core 12 of the shank has an angular opening which can be, for example, between 6° and 24°, according to the length of the implant or other specific needs, and is provided with a thread 13 having a trapezoidal profile, whose rear turns 13' near the neck portion 10A of the implant have the same cylindrical shape and the same diameter as the thread 14 of the same neck 10A.

The cylindrical turns 14 of the neck have a small depth, for example of the order of a few tenths up to a few hundredths of a millimetre, for example between 0.05 and 0.2 mm, and then continue with a greater or increasing depth of the thread 13 towards the apex end of the shank.

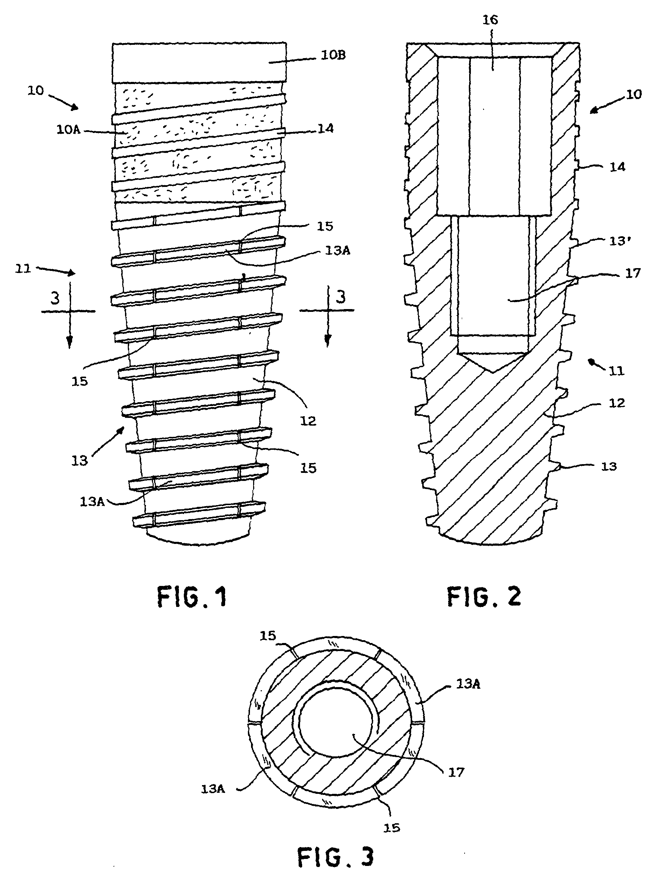

According to a feature of the implant in accordance with the present invention, the turns 13 and 13' of the shank have one or more cross-cuts 15, for example. six in the case shown in Fig. 3, which divide each thread into a corresponding number of independent portions 13A capable of elastically yielding, during screwing, becoming firmly embedded in the bone tissue without the latter being disrupted by the cutting effect of the turns. In this way each turn section 13A is allowed to slip into the most biologically suitable position.

The presence of the cross-cuts 15 in the turns of the conical shank also defines an outflow route for biological liquids which may therefore return along the implant during the screwing down action, preventing the liquids from remaining trapped in the bone cavity with the risk of possible aseptic necrosis due to compression and consequent increases in the healing times.

Moreover the possibility for the individual turn sections 13A to elastically deform independently of the others allows perfect osteo-integration of the same dental implant in that its surface of interface with the bone tissue is considerably increased.

The cross-cuts 15 in the turns of the thread 13 have the same depth as the latter and can be extended rectilinearly, with a disposition parallel to a generatrix of the conical core 12 of the shank as shown in Fig. 1, or may have a helical trend in the same direction or in the opposite direction to that of the thread of the implant.

In the example of the accompanying drawing, the implant has a single screw thread. It is nevertheless clear that implants can also be formed with multiple screw threads without departing from the general features and principles of the present invention.

A further feature of the present invention is shown in Fig. 1 of the accompanying drawings.

From this figure it can be seen that the neck 10A of the implant has a surface which has been appropriately treated, for example roughened, in order to improve the degree of adhesion to the bone tissue, extending between the shank 12 and the peripheral rim 10B defined by a smooth peripheral band around which the bone tissue and gum can be closed in order to prevent the penetration of germs or other foreign substances.

The smooth rim 10B of the neck preferably has a length limited to a few millimetres, for example between 1.5 and 2.5 mm, not excluding values which are higher or lower than those indicated.

The dental implant also has an axial bore 16 with a polygonal shape which allows the implant to be mounted in the bone cavity by means of suitable tools. The polygonal bore 16 continues in a cylindrical bore 17 of smaller diameter, entirely threaded, which in turn is used for anchoring transmucosa or prosthesis components in a manner in itself known.

From what has been said and shown in the accompanying drawings, it is therefore clear that an osteo-integrated dental implant has been provided, of the transmucosa, semi-submerged or submerged screw type, which has innovative features such as to improve the conditions of stability and anchorage of the same implant in the bone cavity, thanks to the presence of transverse cuts 15 in the turns of the thread of the stem, which allow the various thread sections to integrate perfectly with the bone tissue, increasing its contact interface, and hence the capacity of the dental implant to absorb, transmit and dissipate in the surrounding bone tissue the static and dynamic loads which occur during chewing. Finally the presence of the same cuts 15 provides effective routes of outflow for biological liquids, also exerting a self-threading action of the tissue during screwing of the same implant.

The intent therefore is that what has been said and shown in the accompanying drawings has been given purely by way of an example of the general principles of the present invention, and that other modifications or variations may be made to the individual parts of the implant without thereby departing from the invention as claimed.

## Claims

1. An osteo-integrated dental implant of the type comprising:
- a cylindrical neck (10A) and a tapered shank (12) coaxially extending from one side of said neck (10A) ;
- a screw threaded bore (16, 17) axially extending through said neck (10A) and the shank (12) for attachment of a dental prosthesis;
- at least one screw-thread (13) having a trapezoidal profile on the tapered shank (12), said screw-thread (13) including cylindrical turns (13') near said neck (10A), wherein the implant further comprises a rim (10B) having a cylindrical smooth surface radially protruding from the rear end of the neck (10A) which is opposite to the tapered shank (12), said screw-thread (13) of the shank (12) extending with a cylindrical screw-thread portion (14) over the neck (10A) to terminate flush to the cylindrical surface of the peripheral rim (10B); **characterized in that** said screw-thread (13) of the tapered shank (12) is conical, and **in that** the turns of the screw-thread (13) of the tapered shank (12) comprise independent elastically yielding screw portions (13A) between radially extending cross-cuts (15).

2. An osteo-integrated dental implant according to claim 1, **characterised in that** said cross-cuts (15) of the thread (13) are longitudinally aligned in the direction of a generatrix line of the conical surface (12) of the shank (11).

3. An osteo-integrated dental implant according to claim 1, **characterised in that** the cross-cuts (15) of the thread (13) are provided with a helical disposition on the turns of the screw thread (13).

4. An osteo-integrated dental implant according to claim 1, **characterised in that** the cylindrical neck (10A) has an external roughened surface.

5. An osteo-integrated dental implant according to claim 1, **characterised in that** the cylindrical thread (14) of the neck (10A) has a very small depth of between 0.05 and. 0.2 mm.

6. An osteo-integrated dental implant according to any one of the previous claims, **characterised in that** the smooth surface of the peripheral rim (10B) of the neck (10A) extends axially for a length of between 1.5 and 2.5 mm.

7. An osteo-integrated dental implant according to claim 1, **characterised in that** each turn (13) of the threaded shank (11) is provided with at least three angularly spaced cross-cuts (15).

## Patentansprüche

1. In den Knochen integriertes Zahnimplantat des Typs, der umfaßt:
- einen zylindrischen Hals (10A) und einen konischen Schaft (12), der sich von einer Seite des Halses (10A) koaxial erstreckt;
- eine Schraubgewindebohrung (16, 17), die sich axial durch den Hals (10A) und den Schaft (12) erstreckt, um eine Zahnprothese zu befestigen;
- wenigstens ein Schraubgewinde (13) mit einem trapezförmigen Profil an dem konischen Schaft (12), wobei das Schraubgewinde (13) in der Nähe des Halses (10A) zylindrische Gänge (13') enthält, wobei das Implantat ferner einen Rand (10B) umfaßt, der eine zylindrische, glatte Oberfläche besitzt, die vom hinteren Ende des Halses (10A), das sich gegenüber dem konischen Schaft (12) befindet, radial vorsteht, wobei das Schraubgewinde (13) des Schafts (12) durch einen zylindrischen Schraubgewindeabschnitt (14) über den Hals (10A) verlängert ist, um mit der zylindrischen Oberfläche des Umfangsrandes (10B) bündig zu enden; **dadurch gekennzeichnet, daß** das Schraubgewinde (13) des konischen Schafts (12) konisch ist und daß die Gänge des Schraubgewindes (13) des konischen Schafts (12) zwischen radial verlaufenden Quereinschnitten (15) unabhängige, elastisch nachgebende Schraubenabschnitte (13A) umfassen.

2. In den Knochen integriertes Zahnimplantat nach Anspruch 1, **dadurch gekennzeichnet, daß** die Quereinschnitte (15) des Gewindes (13) in Längsrichtung auf die Richtung einer Erzeugenden-Linie der konischen Oberfläche (12) des Schafts (11) ausgerichtet sind.

3. In den Knochen integriertes Zahnimplantat nach Anspruch 1, **dadurch gekennzeichnet, daß** die Quereinschnitte (15) des Gewindes (13) in den Gängen des Schraubgewindes (13) schraubenlinienförmig angeordnet sind.

4. In den Knochen integriertes Zahnimplantat nach Anspruch 1, **dadurch gekennzeichnet, daß** der zylindrische Hals (10A) eine außen aufgerauhte Oberfläche besitzt.

5. In den Knochen integriertes Zahnimplantat nach Anspruch 1, **dadurch gekennzeichnet, daß** das zylindrische Gewinde (14) des Halses (10A) eine sehr geringe Tiefe im Bereich von 0,05 bis 0,2 mm besitzt.

6. In den Knochen integriertes Zahnimplantat nach einem der vorhergehenden Ansprüche, **dadurch gekennzeichnet, daß** sich die glatte Oberfläche des Umfangsrandes (10B) des Halses (10A) axial über eine Länge im Bereich von 1,5 bis 2,5 mm erstreckt.

7. In den Knochen integriertes Zahnimplantat nach Anspruch 1, **dadurch gekennzeichnet, daß** jeder Gang (13) des Gewindeschafts (11) mit wenigstens drei in Winkelrichtung beabstandeten Quereinschnitten (15) versehen ist.

## Revendications

1. Implant dentaire ostéo-intégré du type comprenant :
- un col cylindrique (10A) et une tige à rétrécissement (12) s'étendant coaxialement depuis un côté dudit col (10A);
- un trou taraudé (16, 17) s'étendant axialement à travers ledit col (10A) et la tige (12) pour la fixation d'une prothèse dentaire;
- au moins un filetage de vis (13) ayant un profil trapézoïdal sur la tige à rétrécissement (12), ledit filetage de vis (13) comportant des filets cylindriques (13') près dudit col (10A), l'implant comprenant en outre un rebord (10B) ayant une surface cylindrique lisse faisant saillie radialement depuis l'extrémité arrière du col (10A) qui est opposée à la tige à rétrécissement (12), ledit filetage de vis (13) de la tige (12) s'étendant avec une partie cylindrique à filetage de vis (14) sur le col (10A) pour se terminer à niveau avec la surface cylindrique du rebord périphérique (10B); **caractérisé en ce que** ledit filetage de vis (13) de la tige à rétrécissement (12) est conique, et **en ce que** les filets du filetage de vis (13) de la tige à rétrécissement (12) comprennent des parties de vis indépendantes fléchissant élastiquement (13A) entre des entailles transversales s'étendant radialement (15).

2. Implant dentaire ostéo-intégré selon la revendication 1, **caractérisé en ce que** lesdites entailles transversales (15) du filetage (13) sont alignées longitudinalement dans la direction d'une génératrice de la surface conique (12) de la tige (11).

3. Implant dentaire ostéo-intégré selon la revendication 1, **caractérisé en ce que** lesdites entailles transversales (15) du filetage (13) sont prévues avec une disposition hélicoïdale sur les filets du filetage de vis (13).

4. Implant dentaire ostéo-intégré selon la revendication 1, **caractérisé en ce que** le col cylindrique (10A) a une surface extérieure rugueuse.

5. Implant dentaire ostéo-intégré selon la revendication 1, **caractérisé en ce que** le filetage cylindrique (14) du col (10A) a une profondeur très faible valant de 0,05 à 0,2 mm.

6. Implant dentaire ostéo-intégré selon l'une quelconque des revendications précédentes, **caractérisé en ce que** la surface lisse du rebord périphérique (10B) du col (10A) s'étend axialement sur une longueur valant de 1,5 à 2,5 mm.

7. Implant dentaire ostéo-intégré selon la revendication 1, **caractérisé en ce que** chaque filet (13) de la tige filetée (11) est muni d'au moins trois entailles transversales (15) espacées angulairement.
